# EUROPÄISCHE PATENTSCHRIFT

(11) **EP 2 830 952 B1**
(45) Veröffentlichungstag und Bekanntmachung des Hinweises auf die Patenterteilung: **09.11.2016**
(21) Anmeldenummer: 13712138.0
(22) Anmeldetag: 16.03.2013
(51) Int. Cl.: B65B 17/02, B65B 21/06, B65B 35/36, B65B 35/58

(54) **VORRICHTUNG ZUR BILDUNG VON VERPACKUNGSEINHEITEN**
DEVICE FOR FORMATION OF PACKAGING
DISPOSITIF DE FORMATION DE L'EMBALLAGE

(30) Priorität: 27.03.2012 DE 102012006037
(43) Veröffentlichungstag der Anmeldung: 04.02.2015
(73) Patentinhaber: KHS GmbH, 44143 Dortmund (DE)
(72) Erfinder: VAN WICKEREN, Ernst, 47652 Weeze (DE); NITSCH, Thomas, 47533 Kleve (DE); WAGNER, Stefan, 46509 Xanten (DE); ZAHN, Volker, 34471 Volkmarsen (DE)
(86) Internationale Anmeldenummer: PCT/EP2013/000812
(87) Internationale Veröffentlichungsnummer: WO 2013/143660

(56) Entgegenhaltungen:
- EP-A1- 2 096 039
- EP-A2- 2 258 625
- DE-A1- 2 331 193
- DE-A1- 3 902 667
- DE-A1- 4 126 212
- DE-A1-102006 037 105
- DE-A1-102009 025 824
- DE-A1-102009 044 271

## Beschreibung

Die Erfindung bezieht sich auf eine Vorrichtung zur Herstellung von Gebinden gemäß dem Oberbegriff des Patentanspruchs 1, wobei aus einem breitem Behälterstrom mittels Gassenteilung Behälter in mehrere einspurige Behälterströme umgewandelt werden, und mit mindestens einer Abteil- und/oder Verdichtereinheit zum Abteilen und Verdichten einer vorbestimmten Anzahl an Behältern jeweils zu dem späteren Gebinde zusammengefasst werden, wobei Auftragselemente vorgesehen sind, so dass zumindest einer der Behälter des Gebindes ein Haft- oder Klebemittel und/oder einen Haft- oder Klebemittelauftrag zumindest an einer Kontakt- oder Berührfläche aufweist.

Behälter im Sinne der Erfindung sind beispielsweise Flaschen, Dosen, Tuben, Pouches, jeweils aus Metall, Glas und/oder Kunststoff, also zum Beispiel auch PET-Flaschen, aber auch andere Packmittel, insbesondere solche, die zum Abfüllen von flüssigen oder viskosen Produkten geeignet sind, aber auch bereits zu Gruppen (Mehrfachpack) zusammen gefasste Behälter. Derartige Behälter, z.B. PET-Flaschen weisen einen Kontaktbereich auf, welcher sphärisch gewölbt ausgeführt ist, so dass die Behälter quasi aneinander um eine Umfangsbahn, also an einem "Abrollring" abrollen können. Bei Glasflaschen ist dies bei mehrmaligem Gebrauch der Flasche zum Beispiel mittels des meistens in heller Hervorhebung erkennbaren Abnutzungsringes erkennbar. Derartige "Abrollringe" können bei PET-Flaschen nicht nur im Kopfbereich, sondern auch im Fußbereich angeordnet sein.

Im Detail erfolgt die Herstellung der Gebinde z.B. in der Weise, dass die Behälter auf einer Transportebene eines Transporteurs aufstehend und mit ihrer Behälterachse in vertikaler Richtung oder im Wesentlichen vertikaler Richtung orientiert in einem Massentransport bzw. in einem breiten Behälterstrom zugeführt werden, in dem die Behälter hinsichtlich markanter Behälter und/oder Ausstattungsmerkmale eine willkürliche Orientierung aufweisen. Dieser breite Behälterstrom wird dann durch Gasseneinteilung in mehrere einspurige Behälterströme umgewandelt. In weiteren Verfahrensschritten erfolgt das Abteilen der die späteren Gebinde bzw. deren Behältergruppen bildenden Behälter aus den einspurigen Behälterströmen, das Zusammenführen der notwendigen Anzahl von Behältern jeweils zu einer verdichteten Behältergruppe, in der die Behälter mit mehreren Mantel- oder Umfangsflächen, also mit den Kontakt- oder Berührflächen gegeneinander anliegen, und dass Verbinden der Behälter jeder Behältergruppe zu dem kompakten und festen bzw. stabilen Gebinde.

Es ist bekannt, mehrere Artikel jeweils zu einer Artikelgruppe zusammen zu fassen oder zu formieren und aus den Artikelgruppen unter Verwendung von Schrumpffolien (z.B. US 7 726 464 A1) feste bzw. transportfähige Lager- und Transporteinheiten oder Gebinde herzustellen. Nachteilig ist hierbei unter anderem, dass die dabei verwendeten Folien sowie insbesondere das Aufschrumpfen der Folien durch Wärme- oder Energieeintrag nicht unerhebliche Kosten verursacht.

Vorgeschlagen wurde auch bereits, transportfähige Gebinde dadurch herzustellen, dass die jeweils zu einer Behältergruppe formierten Behälter durch eine die Behältergruppe schlaufenartig umgreifende Umreifung (DE 10 2009 025 824 A1, DE 10 2009 044 271 A1, DE 41 26 212 A1) verpackt, d.h. miteinander zu einem Gebinde verbunden werden, was eine besonders kostengünstige und einfache Möglichkeit zur Herstellung von Gebinden bzw. Transport- und Lagereinheiten darstellt. Die Umreifung kann auch mit den Behältern verklebt werden. Nachteilig bei der Umreifung ist allerdings, dass beim ersten Entnehmen eines Behälters aus einem solchen Gebinde die in dem Gebinde verbliebenen Behälter durch die Umreifung nicht mehr zusammengehalten werden. Dies gilt nicht nur dann, wenn die Umreifung getrennt oder zerschnitten wird, sondern auch dann, wenn es möglich ist, ohne Durchtrennen der Umreifung einen Behälter aus dem Gebinde zu entnehmen.

Weiterhin besteht beim Transport derartiger Gebinde auf einem Bandfördermittel immer die Gefahr, dass sich zylindrische oder weitgehend zylindrische Artikel, wie Dosen, Flaschen oder Behälter durch Vibration, Stöße etc. eine nestende Position einnehmen, also in die Lücke der Nachbarreihe rutschen. Um dies zu verhindern muss bei bekannten Gebinden eine sehr große Spannung auf die Umreifung gebracht werden.

Die DE 10 2006 037 105 A1 dagegen befasst sich mit einem Verfahren zum Zusammenstellen von Flaschenpaketen, bei welchem auf beiden Seiten einer Bahn ein Drehstern vorgesehen wird, welcher Flaschenhälse in Klammern an Flachträgern hineindrückt. Das Flaschenpaket wird noch mit einem Band oder einer Umhüllung (Folie) umfasst.

Gemäß der DE 23 31 193 wird an Behälter ein Klebemittel in schmalen Flächen oder Reihen angebracht, wobei jeweils benachbarte Flächen, welche nicht mit Klebemittel versehen sind, ein Greifen der Packung zum Zwecke des Tragens ermöglichen soll. An den Klebestellen kleben die Behälter aneinander. Die EP 2 096 039 A1 offenbart ebenfalls Behälter mit einem Klebemittel zu versehen, wobei aber zudem noch eine Schrumpffolie um das Flaschenpaket angeordnet wird.

Aufgabe der Erfindung ist es, eine Vorrichtung zum Herstellen von Gebinden der Eingangs genannten Art anzugeben, bei der trotz des Verzichts auf eine umgreifende Folie und/oder trotz des Verzichts auf eine Umreifung in einfacher Weise stets vermieden ist, dass die Artikel bei dem Transport in eine nestende Position gelangen, wobei auch nach der Entnahme eines oder mehrerer Artikel aus einem Gebinde der Zusammenhalt der verbliebenen Artikel im Gebinde erhalten bleibt bzw. wieder hergestellt werden kann.

Zur Lösung dieser Aufgabe ist eine Vorrichtung zur Herstellung von Gebinden entsprechend dem Patentanspruch 1 vorgesehen, wobei ein Lineartransporteur vorgesehen ist, welcher zumindest ein Transportelement aufweist, das einen steuerbaren Antrieb aufweist und entlang eines Führungselementes alternierend linear hin- und her bewegbar ist, wobei das Transportelement eine der Anzahl von Behältern des späteren Gebindes entsprechende Anzahl an Kopfführungen aufweisen, welche relativ zum Transportelement axialbeweglich und/oder rotierbar sind.

Behälter im Sinne der Erfindung sind, z.B. PET-Flaschen, d.h. u.a. Flaschen, Dosen Tuben, Pouches, jeweils aus Metall, Glas und/oder Kunststoff, aber auch andere Packmittel, insbesondere solche, die zum Abfüllen von flüssigen oder viskosen Produkten geeignet sind, aber auch bereits zu Gruppen (Mehrfachpack) zusammen gefasste Behälter. Die Behälter des Gebindes sind in nicht-nestender Position angeordnet.

"Haft- oder Klebemittel" in Sinne der Erfindung sind u.a. alle Materialien oder Massen, mit denen eine Klebeverbindung zwischen Behältern möglich ist, insbesondere Verbindungen, Materialien oder Massen, die im flüssigen oder zähflüssigen Zustand aufgebracht einen selbstklebenden Auftrag bilden und/oder unter Anwendung von Druck und/oder durch Energieeintrag und/oder nach einem Aushärten oder Vernetzen (auch durch Energieeintrag) eine Klebeverbindung bewirken. "Haft- oder Klebemittel" in Sinne der Erfindung sind u.a. auch Mehrschichtmaterialien, z.B. solche aus wenigstens einem Trägermaterial, welches mit einem Material beschichtet ist, mit dem eine Klebeverbindung zwischen Behältern möglich ist, also mindestens zweiseitig haftend- und/oder klebend aktiv sind. Solche Haft- oder Klebemittel können als Pads bezeichnet werden. Ein "klebender" Behälter weist im Sinne der Erfindung Haft- oder Klebemittel auf, bzw. ist mit einem Haft- und Klebemittelauftrag versehen. Das Haft- oder Klebemittel ist bevorzugt derart gewählt, dass die Behälter händisch und zerstörungsfrei aus dem Gebinde lösbar bzw. voneinander trennbar sind. Denkbar ist, dass flüssiges Klebemittel von den Auftragselementen aufgetragen wird. Möglich ist, wenn ein niedrigviskoser UV-aushärtender Klebstoff aufgetragen wird. Geeignet wäre auch ein Heizleim, welcher jedoch sehr schnell abkühlt, und so eventuell seine Klebeigenschaften aufgeben könnte, bevor die Behälter des Gebindes hinreichend miteinander verklebt sind. Ein UV-aushärtender Klebstoff ist auch vorteilhaft hinsichtlich der besonders leichten Einstellung seiner gewünschten Eigenschaften. Eine entsprechende Aushärtstation bzw. eine Aushärtstrecke ist in sinnvoller Weise stromab der Auftragselemente stationär oder entlang des Lineartransporteurs oberhalb bzw. gegebenenfalls auch unterhalb vorgesehen. Eine Aushärtstation kann zum Beispiel ein Tunnel mit UV-Ausleuchtung sein.

Zielführend ist, wenn das Transportelement als Schlitten ausgeführt ist, der auch als Tragrahmen bezeichnet werden kann. Das Transportelement bzw. der Schlitten weist den steuerbaren Antrieb auf, welcher von einer entsprechenden Steuereinheit ansteuerbar ist. Dies ist günstig im Sinne der Erfindung, da das Transportelement so eine an die jeweilige Erfordernis angepasste Transportgeschwindigkeit haben kann.

Mit dem steuerbaren Antrieb steht das Transportelement mit dem Führungselement in Kontakt. Das Führungselement kann auch als Führungsschiene bezeichnet werden, an welcher das Transportelement durch den steuerbaren Antrieb entlang bewegt wird. Zweckmäßig im Sinne der Erfindung ist, wenn das Transportelement bzw. der Schlitten an seiner jeweils längs zur Transportrichtung angeordneten Längsseite an jeweils einem Führungselement gehalten ist. Die senkrecht zu den Längsseiten angeordneten Querseiten erstrecken sich quer zur Transportrichtung zwischen den Führungselementen, so dass der Tragrahmen bzw. der Schlitten sicher und stabil geführt ist. Der steuerbare Antrieb kann dabei lediglich an einer der beiden Längsseiten angeordnet sein, wobei an der jeweils anderen Längsseite dann ein entsprechendes, durch den gegenüberliegenden Antrieb angetriebenes Rollenelement angeordnet sein kann. Natürlich können auch an beiden Längsseiten steuerbare Antriebe angeordnet sein, welche natürlich synchronisiert sein sollten. Der steuerbare Antrieb kann z.B. als Servomotor ausgeführt sein.

Möglich wäre auch eine Ausgestaltung, bei welcher das Transportelement als doppelter Kopfschlitten ausgeführt ist, wobei die jeweiligen Kopfführungen natürliche jeweils separat ansteuerbar sind. Mit einer solchen Ausgestaltung ist die Leistung steigerbar, da bezogen auf einen einzelnen Schlitten eine gesteigerte Anzahl von späteren Gebinden bearbeitbar ist. Ein Vorteil ist auch hinsichtlich der Rückführzeit des Transportelementes zu sehen, da auf dem "Hinweg" mehr spätere Gebinde verarbeitbar sind, kann dem Transportelement mehr Zeit für den "Rückweg" zur Verfügung gestellt werden. Zudem ist der Antrieb steuerbar, so dass das Transportelement auf dem "Rückweg" wesentlich schneller sein kann als auf dem "Hinweg".

Mit den Kopfführungen werden die Behälter an dem Transportelement gehalten von der Eingangsseite an den Auftragselementen vorbei zur Ausgangsseite transportiert. Eingangsseitig werden die Behälter von einem Eingangsförderer übernommen. Ausgangsseitig werden die Behälter, mit Haft- und Klebemittel versehen, auf einen Ausgangsförderer übergeben. Der Eingangs- bzw. der Ausgangsförderer kann jeweils als Bandförderer ausgeführt sein

Zweckmäßig ist, dass das Transportelement einen steuerbaren Antrieb hat, welcher von der besagten Steuereinheit separat ansteuerbar ist. So kann das Transportelement unterschiedliche Geschwindigkeiten entlang seines Transportweges, also entlang des "Hinweges" aber auch entlang des "Rückweges" aufweisen. Der Hinweg im Sinn der Erfindung ist der Weg, bei welcher das Transportelement die daran gehaltenen Behälter in Transportrichtung von der Eingangsseite in Richtung zur Ausgangsseite transportiert. Bei dem Rückweg dagegen wird das Transportelement leer, also ohne daran gehaltene Behälter entgegen der Transportrichtung von der Ausgangsseite zur Eingangsseite transportiert.

Mit dem Transportelement können die Behälter entlang des Hinweges freischwebend transportiert werden, da die Behälter an den Kopfführungen gehalten sein können. Die Kopfführungen können Pack- oder Zentriertulpen zum mündungsseitigen Halten der Behälter aufweisen. Günstig ist, dass die Kopfführungen relativ zum Transportelement also relativ zum Tragrahmen bzw. Schlitten beweglich sind. So kann z.B. eine gezielte Ausrichtung der Behälter nach Gestaltungsmerkmalen, nach vorhandenen Etiketten oder ähnlichen Merkmalen durchgeführt werden, so dass die Behälter innerhalb des späteren Gebindes zueinander gleichausgerichtet sind. Dazu müssen lediglich die Kopfführungen entsprechend angesteuert werden, wobei noch zweckmäßig ist, wenn jede Kopfführung separat, also unabhängig von den jeweils anderen steuerbar ist. Die Steuersignale bzw. Steuerbewegungen können von einer entsprechenden Steuereinheit, aber natürlich auch von der zentralen Steuereinheit veranlasst werden. Dabei könnte lediglich eine entsprechende Inspektionsvorrichtung vorgesehen werden, welche die Istposition der Behälter anhand der zu untersuchenden Merkmale, beispielsweise anhand der Etikettenposition erkennt, und entsprechender Abgleiche mit abgelegten Sollpositionen durchführt und sodann entsprechende Signale generiert. Günstig ist dabei, dass die Kopfführungen um Ihre Achse herum rotierbar, aber auch axialbeweglich sind, wobei die Behälter freischwebend transportiert werden können. Durch die vorhandenen Freiheitsgrade können sich so verschiedene, erforderliche Positionsänderungen überlagern, so dass jeder Behälter im Einkfang mit den anderen Behältern in die gewünschte Sollposition ausrichtbar ist. Durch den freischwebenden Transport können auf den Boden wirkende Reibwiderstände ausgeschlossen werden. Selbstverständlich können die Behälter auch an den Kopfführungen gehalten sein und bodenseitig auf Förderbändern aufstehen.

In bevorzugter Ausgestaltung sind die Auftragselemente bzw. Auftragsstationen in Transportrichtung gesehen vor der Übergabe der Behälter auf bzw. an den Ausgangsförderer angeordnet. Die Auftragselemente versehen den oder die Behälter mit Haft- oder Klebemittel, wobei die Behälter mittels der axialen Bewegungsmöglichkeit der Behälter über die Kopfführungen optional zueinander ausgerichtet gegeneinander bewegt werden können, sodass bereits ein gewisser Anpressdruck erzeugbar ist, was einem Klebe- bzw. Haftverbund der Behälter aneinander zugute kommt.

In günstiger Ausgestaltung können in Transportrichtung gesehen aufeinander folgend mehrere Auftragselemente bzw. Auftragsstationen vorgesehen sein, was auch dem Umstand der optionalen Rotation des an der jeweiligen Pack- oder Zentriertulpe gehaltenen Behälters Rechnung trägt. Durch die Rotation der Behälter entlang der Transportrichtung könnten so in Umfangsrichtung der Behälter gesehen versetzte Kontakt- und Berührflächen mit Haft- oder Klebemittel versehen werden, was einen Klebeverbund begünstigt, da so quasi jeder Behälter zum direkt benachbarten Behälter an zumindest zwei Kontakt- und Berührflächen einen Klebeverbund eingehen kann.

Das Gebinde kann z.B. aus sechs Behältern gebildet sein. Dabei kann von den Kopfführungen, wie bereits oben angedeutet, eine Kraft quer und längs zur Transportrichtung ausgeübt werden, so dass die betreffenden Behälter eines Gebindes unter Krafteinwirkung gegeneinander gedrückt bzw. gepresst werden, was den Klebverbund positiv beeinflusst. Dazu könnten die Kopfführungen weiter angenähert werden, um die wirkende Druckkraft zu erhöhen.

Vorteilhaft ist, dass mit einem Transportelement jeweils mehrere spätere Gebinde, also z.B. acht Gebinde mit je sechs Behältern, wie oben beschrieben bearbeitet werden können. So können eingangsseitig acht separate Eingasströme aufgenommen werden wobei ausgangsseitig vier separate Ausgangsströme absetzbar sein können.

Der Ausgangsförderer kann Bänder aufweisen, welche ein Drehen der Gebinde in jegliche Richtungen ermöglicht. Beispielsweise können auch Beschleunigungsbänder vorgesehen sein.

Der Eingangsförderer kann für jeden Behälterstrom auch einen Förderer aufweisen, wobei jeweils zwei Förderer paarweise angeordnet sind und einander parallel laufen, wenn das Gebinde quer Transportrichtung gesehen zwei benachbarte Behälter aufweist.

Wird UV-aushärtender Klebstoff aufgetragen, kann eine Aushärtestation oder -strecke vorgesehen sein. Die Aushärtestation kann ober- oder unterhalb der Transportflächen angeordnet sein, wobei auch ein Tunnel mit UV-Ausleuchtung denkbar ist. Um den Transport der Gesamtgebinde in Richtung zur Austragsseite zu unterstützen, könnten am Ausgangsförderer noch Mitnehmerelemente vorgesehen werden.

Das jeweilige Gebinde kann in Transportrichtung gesehen mehrreihig, also beispielhaft zweireihig oder z.B. dreireihig ausgeführt sein. Möglich ist die Auftragelemente bzw. Auftragsstationen nicht nur starr an dem Lineartransporteur anzuordnen, sondern ebenfalls beweglich, so dass die Auftragelemente zumindest eine Teilstrecke entlang mit dem jeweiligen Behälterstrom bzw. mit dem Transportelement mitgeführt werden könnten.

Möglich ist, das Gebinde, also das jeweilige Gesamtgebinde noch mit einem Trageelement, beispielsweise mit einem Griff zu versehen, wozu geeignete Vorrichtungen vorgesehen werden können, welche stromab der Ausgangsseite oder an geeigneter Stelle an dem Lineartransporteur angeordnet ist. Natürlich kann das Tragelement mit dem zuvor genannten Haft- oder Klebemittel an dem Gebinde befestigt werden.

Mit der Erfindung wird so eine Vorrichtung zur Herstellung eines Gebindes zur Verfügung gestellt, welche trotz des Verzichts auf eine umgreifende Folie und/oder trotz des Verzichts auf eine Umreifung in einfacher Weise vermeidet, dass die Behälter bei dem Transport in eine nestende Position gelangen, wobei auch nach der Entnahme eines oder mehrerer Behälter aus einem Gebinde der Zusammenhalt der verbliebenen Behälter im Gebinde erhalten bleibt bzw. wieder hergestellt werden kann. Durch den Verzicht auf eine Folie oder ein Umreifungsband (folienloser Flaschenpack), wird die Umwelt durch Vermeidung von Abfall entlastet, wobei so auch Ressourcen zur Herstellung der meist aus Kunststoff hergestellten Folien oder Unreifungen geschont werden. Die Behälter eines Gebindes werden während des Transportes, also im kontinuierlichen Betrieb der Vorrichtung zur Herstellung von Gebinden, bzw. der Verpackungsmaschine direkt aneinander geklebt. Zudem ist ein folienloser Flaschenpack bei minimalem Klebemittelauftrag erreichbar, welcher eine hinreichende Bindung der einzelnen Behälter zueinander aufweist.

Mit der Erfindung sind extrem hohe Leistungen erreichbar, was unter anderen auch auf die beliebig steuerbare Geschwindigkeit des Transportelementes zurückzuführen ist, welches hinsichtlich Beschleunigung bzw. Verzögerung einstellbar steuerbar ist.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: einen Teilabschnitt einer Vorrichtung zum Herstellen mehrerer Gebinde mit sechs Artikeln bzw. Behältern in einer Seitenansicht,
- Fig. 2: den Teilabschnitt aus Figur 1 in einer Aufsicht und
- Fig.3: den Teilabschnitt aus Figur 1 in einer Frontalansicht.

In den unterschiedlichen Figuren sind gleiche Teile stets mit denselben Bezugszeichen versehen, weswegen diese in der Regel auch nur einmal beschrieben werden.

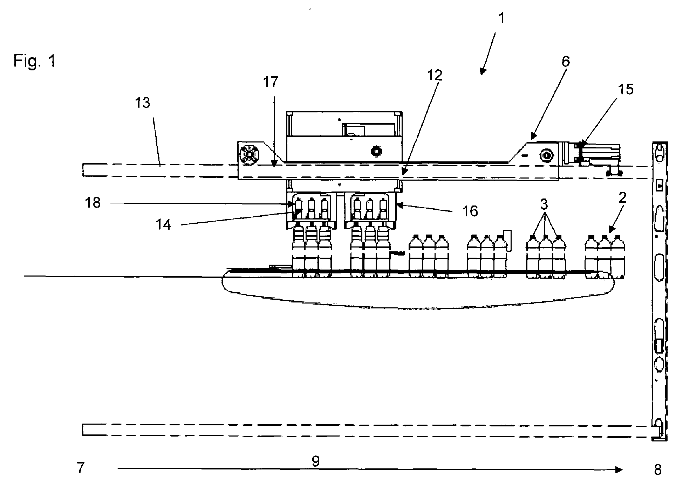

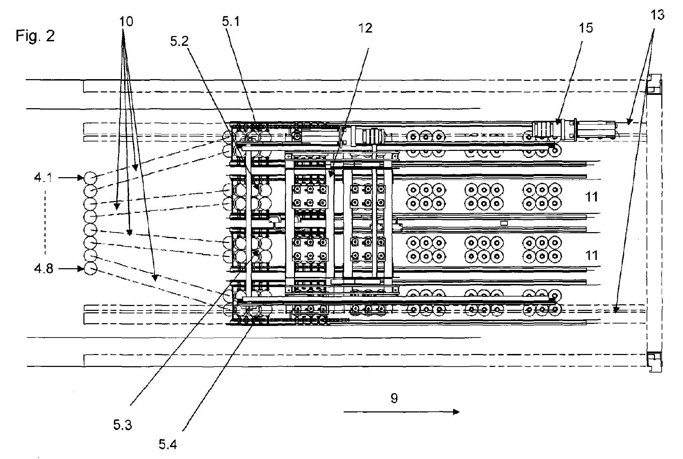

Figur 1 zeigt einen Teilabschnitt einer Vorrichtung 1 zur Herstellung von Gebinden 2 aus Behältern 3, bzw. einer Verpackungsmaschine 1, wobei im Vorfeld aus einem breitem Behälterstrom Behälter 3 in mehrere, wie dargestellt beispielhaft in acht einspurige Behälterströme 4. 1 bis 4.8 umgewandelt werden (nur Figur 2), in welchen die Behälter 3 beispielsweise bezüglich ihrer Behälter - und/oder Ausstattungsmerkmale eine willkürliche Orientierung aufweisen, durch Abtrennen und Zusammenführen einer vorbestimmten Anzahl an Behältern 3, also beispielsweise jeweils sechs Behälter 3, verdichtete oder formierte Behältergruppen 5.1 bis 5.4 oder Teilgebinde 5.1 bis 5.4 (nur Figur 2) gebildet und nachfolgend jeweils zu dem Gebinde 2 zusammengefasst werden, wobei zumindest einer der Behälter 3 des Gebindes 2, bevorzugt jeder Behälter 3 ein Haft- oder Klebemittel und/oder einen Haft- oder Klebemittelauftrag zumindest an einer Kontakt- oder Berührfläche aufweist.

Figur 1 zeigt, dass ein Lineartransporteur 6 vorgesehen ist, welcher die Behälter 3 von einer Eingangsseite 7 in Richtung zu einer Ausgangsseite 8 transportiert. Die Transportrichtung von der Eingangsseite 7 zur Austragsseite 8 ist mittels des Pfeils 9 dargestellt. Eingangsseitig ist für jeden Behälterstrom 4.1 bis 4.8 ein Eingangsförderer 10 vorgesehen, wobei der Eingangsförderer 10 auch als Weiche oder Verteilerstrecke bezeichnet werden kann. Ausgangsseitig sind jeweils Ausgangsförderer 11 vorgesehen. Zwischen den Ausgangsförderern 11 sind Geländer angeordnet, an welchen mitlaufende Mitnehmerelemente angeordnet sein können.

Der Lineartransporteur 6 weist beispielhaft lediglich ein einziges Transportelement 12 auf, das einen steuerbaren Antrieb 15 aufweist und entlang eines Führungselementes 13 linear hin- und her bewegbar ist, wobei das Transportelement 12 eine der Anzahl von Behältern 3 des späteren Gebindes 2 entsprechende Anzahl an Kopfführungen 14 aufweist, welche relativ zum Transportelement 12 axialbeweglich und/oder rotierbar sind.

Das Transportelement 12 ist beispielhaft als Schlitten bzw. als Tragrahmen ausgeführt, und weist den steuerbaren Antrieb 15 auf. Der Antrieb 15 kann als Servomotor ausgeführt sein.

Mit dem steuerbaren Antrieb 15 steht das Transportelement 12 mit dem Führungselement 13 bzw. mit der Führungsschiene 13 in Kontakt, an welcher das Transportelement 12 durch den steuerbaren Antrieb 15 entlang bewegt wird. Wie Figur 2 entnehmbar ist, weist jede Seite des Lineartransporteurs 6 jeweils ein Führungselement 13 bzw. Führungsschiene 13 auf, zwischen denen das Transportelement 12 beweglich gelagert ist.

Mit den Kopfführungen 14 werden die Behälter 3 an dem Transportelement 12 gehalten von der Eingangsseite an nicht dargestellten Auftragselementen zum Auftragen von Haft- oder Klebemittel vorbei zur Ausgangsseite transportiert. Eingangsseitig werden die Behälter 3 von dem Eingangsförderer 10 übernommen. Ausgangsseitig werden die Behälter 3 auf den Ausgangsförderer 11 übergeben. Der Eingangs- bzw. der Ausgangsförderer kann jeweils als Bandförderer ausgeführt sein.

Das Transportelement 12 bzw. der Schlitten ist an seiner jeweils längs zur Transportrichtung (Pfeil 9) angeordneten Längsseite 17 an jeweils einem Führungselement 13 gehalten.

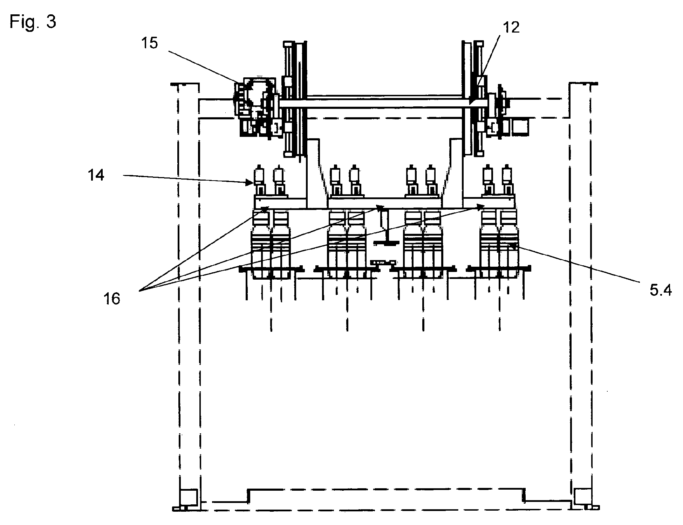

Der steuerbare Antrieb 15 ist mittels einer Steuereinheit separat ansteuerbar. So kann das Transportelement 12 unterschiedliche Geschwindigkeiten entlang seines Transportweges aufweisen. Insbesondere kann das Transportelement 12, entlang des Rückweges eine höhere Geschwindigkeit aufweisen als entlang des Hinweges. Wie in Figur 2 und 3 erkennbar, weist das Transportelement 12 beispielhaft sechs Gebindeaufnahmen 16 auf, an welchen die Kopfführungen 14 angeordnet sind, so dass acht spätere Gebinde 2 mit einem Transportelement 12 transportierbar sind. Aufgrund der jeweils gewählten Ansicht sind in Figur 2 beispielhaft zwei in Transportrichtung aufeinander folgende Gebindeaufnahmen 16 erkennbar, wobei in Figur 3 quer zur Transportrichtung beispielhaft drei Gebindeaufnahmen 16 erkennbar sind, wobei die mittlere Gebindeaufnahme 16 für zwei spätere Gebinde 2 ausgeführt ist.

Die Längs- und Querseiten des Schlittens 12 sind horizontal ausgerichtet, wobei zumindest an den Ecken Rollen zum Abrollen an dem Führungselement angeordnet sind. Die Gebindeaufnahmen 16 sind über im Wesentlichen in Hochrichtung verlaufenden Stegen zum Schlitten 12 beabstandet.

Möglich ist, dass die Behälter 3 entlang des Hinweges frei schwebend transportiert werden, da die Behälter an den Kopfführungen 14 gehalten sind.

Die Kopfführungen 14 können Pack- oder Zentriertulpen 18 zum mündungsseitigen Halten der Behälter 3 aufweisen. Beispielhaft sind die Kopfführungen 14 relativ zum Transportelement 12 also relativ zum Tragrahmen bzw. Schlitten beweglich. So kann z.B. eine gezielte Ausrichtung der Behälter 3 nach Gestaltungsmerkmalen, nach vorhandenen Etiketten oder ähnlichen Merkmalen durchgeführt werden, so dass die Behälter3 innerhalb des späteren Gebindes 2 zueinander gleichausgerichtet sind. Dazu müssen lediglich die Kopfführungen 14 entsprechend angesteuert werden, wobei noch zweckmäßig ist, wenn jede Kopfführung 14 separat, also unabhängig von den jeweils anderen steuerbar ist. Die Steuersignale bzw. Steuerbewegungen können von einer entsprechenden Steuereinheit, aber natürlich auch von der zentralen Steuereinheit veranlasst werden. Dazu könnte lediglich eine entsprechend Inspektionsvorrichtung vorgesehen werden, welche die Istposition der Behälter erkennt, und entsprechender Abgleiche mit abgelegten Sollpositionen durchführt und sodann entsprechende Signale generiert. Günstig ist dabei, dass die Kopfführungen 14 um Ihre Hochachse herum rotierbar sind, aber auch entlang von Quer- bzw. Längsachsen axialbeweglich sind, wobei die Behälter 3 frei schwebend transportiert werden können.

In bevorzugter Ausgestaltung sind die Auftragselemente vor der Übergabe der Behälter 3 auf bzw. an den Ausgangsförderer 11 und nach der optionalen Ausrichtung der Behälter angeordnet. Die Auftragselemente versehen den oder die Behälter mit Haft- oder Klebemittel, wobei die Behälter 3 mittels der axialen Bewegungsmöglichkeit der Behälter über die Kopfführungen 14 optional zueinander ausgerichtet gegeneinander bewegt werden können, sodass bereits ein gewisser Anpressdruck erzeugbar ist, was einem Klebe- bzw. Haftverbund der Behälter 3 aneinander zugute kommt.

Natürlich können in Transportrichtung (Pfeil 9) gesehen aufeinander folgend mehrere Auftragselemente bzw. Auftragsstationen vorgesehen sein.

### Bezugszeichenliste:

- 1: Vorrichtung zur Herstellung von Gebinden/Verpackungsmaschine
- 2: Gebinde
- 3: Behälter
- 4: Behälterspur (4.1 bis 4.8)
- 5: Teilgebinde (5.1 bis 5.4)
- 6: Lineartransporteur
- 7: Eingangsseite
- 8: Ausgangsseite
- 9: Transportrichtung
- 10: Eingangsförderer
- 11: Ausgangsförderer
- 12: Transportelemente
- 13: Führungselemente
- 14: Kopfführungen
- 15: steuerbarer Antrieb
- 16: Gebindeaufnahmen
- 17: Längsseite
- 18: Pack- oder Zentriertulpe

## Patentansprüche

1. Vorrichtung zur Herstellung von Gebinden (2), wobei aus einem breitem Behälterstrom mittels Gassenteilung Behälter (3) in mehrere einspurige Behälterströme (4.1 bis 4.8) umgewandelt werden, und mit mindestens einer Abteil- und/oder Verdichtereinheit zum Abteilen und Verdichten einer vorbestimmten Anzahl an Behältern (3) Teilgebinde (5.1 bis 5.4) gebildet und nachfolgend jeweils zu dem späteren Gebinde (2) zusammengefasst werden, wobei Auftragselemente vorgesehen sind, so dass zumindest einer der Behälter (3) des Gebindes (2; 5.1 bis 5.4) ein Haft- oder Klebemittel und/oder einen Haft- oder Klebemittelauftrag zumindest an einer Kontakt- oder Berührfläche aufweist, **gekennzeichnet durch**
einen Lineartransporteur (6), welcher zumindest ein Transportelement (12) aufweist, das einen steuerbaren Antrieb (15) aufweist und entlang eines Führungselementes (13) alternierend linear hin- und her bewegbar ist, wobei das Transportelement (12) eine der Anzahl von Behältern (3) des späteren Gebindes (2; 5.1 bis 5.4) entsprechende Anzahl an Kopfführungen (14) zum hängenden Transport der Behälter (3) aufweist, welche relativ zum Transportelement (12) axialbeweglich und rotierbar sind, und wobei die Behälter (3) mittels der axialen Bewegungsmöglichkeit der Behälter über die Kopfführungen (14) zueinander ausgerichtet und gegeneinander bewegt werden können, sodass ein Anpressdruck erzeugbar ist, und wobei das Transportelement (12) als Schlitten ausgeführt ist, welcher den steuerbaren Antrieb (15) aufweist.

2. Vorrichtung nach Anspruch 1, **dadurch gekennzeichnet, dass** das Transportelement (12) jeweils an seiner Längsseite (17) an einem Führungselement (13) geführt ist.

3. Vorrichtung nach einem der vorhergehenden Ansprüche, **dadurch gekennzeichnet, dass** die Behälter (3) mittels des Transportelementes (12) freischwebend zumindest entlang eines Teilabschnittes transportiert werden.

4. Vorrichtung nach einem der vorhergehenden Ansprüche, **dadurch gekennzeichnet, dass** die Behälter (3) in dem Transportelement (12) kopfseitig geführt und bodenseitig auf steuerbaren Förderbändern aufstehen.

5. Vorrichtung nach einem der vorhergehenden Ansprüche, **dadurch gekennzeichnet, dass** die Kopfführungen (14) unabhängig voneinander ansteuerbar sind.

6. Vorrichtung nach einem der vorhergehenden Ansprüche, **dadurch gekennzeichnet, dass** das Transportelement (12) so ausführbar ist, das mehrere spätere Gebinde (2) damit transportierbar sind.

7. Vorrichtung nach einem der vorhergehenden Ansprüche, **dadurch gekennzeichnet, dass** die Auftragselemente die Behälter (3) entlang einer Teilstrecke begleiten.

## Claims

1. Apparatus for producing bundles (2), wherein containers (3) are converted by means of lane division from a wide container stream into a plurality of single-track container streams (4.1 to 4.8), and partial bundles (5.1 to 5.4) are formed using at least one dividing-off and/or compactor unit for dividing off and compacting a predetermined number of containers (3) and thereafter in each case combined to form the subsequent bundle (2), wherein application elements are provided such that at least one of the containers (3) of the bundle (2; 5.1 to 5.4) has an adhesive and/or an application of adhesive at least on one contact face, **characterised by**
a linear transporter (6), which has at least one transport element (12) which has a controllable drive (15), and can be moved back and forth linearly in an alternating manner along a guide element (13), wherein the transport element (12) has a number of head guides (14) corresponding to the number of containers (3) of the subsequent bundle (2; 5.1 to 5.4), which head guides are axially movable and rotatable relative to the transport element (12), and wherein the containers (3) can be aligned with each other and moved against one another by means of the axial movement possibility of the containers over the head guides (14), such that a pressing pressure can be produced, and wherein the transport element (12) is configured as a slide, which comprises the controllable drive (15).

2. Apparatus according to claim 1, **characterised in that** the transport element (12) is guided in each case on its longitudinal side (17) at a guide element (13).

3. Apparatus according to any one of the preceding claims, **characterised in that** the containers (3) are transported by means of the transport element (12) floating freely at least along one part section.

4. Apparatus according to any one of the preceding claims, **characterised in that** the containers (3) are guided in the transport element (12) on the head side and stand on the bottom side on controllable conveyor belts.

5. Apparatus according to any one of the preceding claims, **characterised in that** the head guides (14) are controllable independently of one another.

6. Apparatus according to any one of the preceding claims, **characterised in that** the transport element (12) can be configured in such a way that a plurality of later bundles (2) can be transported with it.

7. Apparatus according to any one of the preceding claims, **characterised in that** the application elements accompany the containers (3) along a part section.

## Revendications

1. Dispositif servant à fabriquer des unités d'emballage (2), dans lequel des contenants (3) d'un large flux de contenants sont transformés, au moyen d'un système de division de lignes, en plusieurs flux de contenants (4.1 à 4.8) à une voie, et des unités d'emballage partielles (5.1 à 5.4) sont formées avec au moins une unité de tri et/ou de compactage servant au tri et au compactage d'un nombre prédéfini de contenants (3) et sont chacune regroupées ensuite en l'unité d'emballage (2) ultérieure, dans lequel sont prévus des éléments d'application de sorte qu'au moins un des contenants (3) de l'unité d'emballage (2 ; 5.1 à 5.4) présente un adhésif ou une colle et/ou une couche d'adhésif ou de colle au moins au niveau d'une surface de contact ou d'appui, **caractérisé par**
un transporteur linéaire (6), qui présente au moins un élément de transport (12) qui présente un entraînement (15) pouvant être commandé et qui peut effectuer des déplacements linéaires en va-et-vient en alternance le long d'un élément de guidage (13), dans lequel l'élément de transport (12) présente un nombre de guidages de tête (14) servant au transport en suspension des contenants (3) correspondant au nombre de contenants (3) de l'unité d'emballage (2 ; 5.1 à 5.4) ultérieure, lesquels guidages de tête sont mobiles de manière axiale et peuvent tourner par rapport à l'élément de transport (12), et dans lequel les contenants (3) peuvent être orientés les uns par rapport aux autres et être déplacés les uns contre les autres au moyen de la possibilité de déplacement axial des contenants par l'intermédiaire des guidages de tête (14) de manière à pouvoir générer une pression de compression, et dans lequel l'élément de transport (12) est réalisé sous la forme d'un chariot qui présente l'entraînement (15) pouvant être commandé.

2. Dispositif selon la revendication 1, **caractérisé en ce que** l'élément de transport (12) est guidé, respectivement au niveau de son côté longitudinal (17), au niveau d'un élément de guidage (13).

3. Dispositif selon l'une quelconque des revendications précédentes, **caractérisé en ce que** les contenants (3) sont transportés, au moyen de l'élément de transport (12), de manière librement flottante au moins le long d'un tronçon partiel.

4. Dispositif selon l'une quelconque des revendications précédentes, **caractérisé en ce que** les contenants (3) sont guidés côté tête dans l'élément de transport (12) et sont dressés côté fond sur des bandes de convoyage pouvant être commandées.

5. Dispositif selon l'une quelconque des revendications précédentes, **caractérisé en ce que** les guidages de tête (14) peuvent être pilotés indépendamment les uns des autres.

6. Dispositif selon l'une quelconque des revendications précédentes, **caractérisé en ce que** l'élément de transport (12) peut être réalisé de manière à pouvoir transporter plusieurs unités d'emballage (2) ultérieures.

7. Dispositif selon l'une quelconque des revendications précédentes, **caractérisé en ce que** les éléments d'application accompagnent les contenants (3) le long d'un trajet partiel.
